# EUROPEAN PATENT SPECIFICATION

(11) **EP 0 591 154 B1**
(45) Date of publication and mention of the grant of the patent: **14.08.1996**
(21) Application number: 90917721.4
(22) Date of filing: 06.11.1990
(51) Int. Cl.: F01N 1/24

(54) **TURBOFAN ENGINE FIXED PLUG NOISE SUPPRESSOR**
SCHALLDÄMPFER MIT ZENTRALKÖRPER FÜR EIN MANTELSTROMTRIEBWERK
AMORTISSEUR DE BRUIT A TAMPON FIXE POUR MOTEURS DE TURBOREACTEURS A DOUBLE FLUX

(30) Priority: 06.11.1989 US 432367
(43) Date of publication of application: 13.04.1994
(73) Proprietor: THE NORDAM GROUP, Inc., Tulsa, Oklahoma 74120 (US)
(72) Inventor: Torkelson, Delbert W., Claremore, Oklahoma 74017 (US)
(74) Representative: Bass, John Henton
(86) International application number: US9006440
(87) International publication number: WO9106750

(56) References cited:
- EP-A- 0 219 218
- US-A- 3 750 402
- US-A- 4 137 992
- US-A- 4 433 751
- US-A- 4 696 159
- US-A- 4 909 346
- JOURNAL OF THE ACOUSTICAL SOCIETY OF AMERICA vol. 58, no. 1, 1 July 1975, NEW YORK US pages 155 - 172 ARCTANDER, HODGE, TATE 'development of noise-reduction concepts for 727 and 737 airplanes'

## Description

### Summary of the Invention

Noise generated by aircraft jet engines during take-off and landing is a matter of serious concern in most metropolitan areas of the world. In the United States alone, approximately 5 million people live or work adjacent airports and are affected significantly by aircraft noise. Many municipalities have taken action to require reduction in aircraft noise.

Much work has been done on designing turbofan and turbojet aircraft engines to reduce noise levels. For background information relating to noise reduction systems for jet engines, reference may be had to United States patents US-A-: 3,710,890; 4,077,206; 4,117,671; 4,501,393; and to Arctander et al. J. Acoust. Soc. Am., Vol. 58, No. 1, July 1975, pages 155-172.

Herman, in his United States patent US-A-4,137,992, describes a noise suppressor system for a turbofan engine comprising a tubular exhaust shroud affixed to the engine exhaust end, an elongated centerbody supported within the exhaust shroud and having an external cross-sectional area less than the internal cross-sectional area of the exhaust shroud, providing an annular area through which thrust producing exhaust gases of the engine pass, acoustical lining affixed to at least a substantial portion of the internal circumferential area of the shroud in the area thereof receiving the centerbody, and acoustical lining affixed to at least a substantial portion of the exterior surface of the centerbody in the area thereof received within the exhaust shroud.

The present invention secures a further improvement in noise reduction, being characterized in that that the acoustical lining affixed to the exhaust shroud and the centerbody varies in sound attenuation characteristics from one portion to another of the annular area whereby a selected band of sound frequencies is attenuated.

These features are advantageously used in combination with a mixing nozzle including: a mixing nozzle positioned between the engine aft exhaust end and said centerbody to cause engine gas mixing to increase the frequency of the internal noise source and to thereby change the frequency of the engine noise to that which is more efficiently attenuated in the acoustically lined annular area within the exhaust shroud.

Examples of the use of such mixers for noise suppression are found in the previously referenced United States Patents US-A-4,117,671 and US-A-4,077,206. These flow mixers have been credited with noise reduction in the range of 3.5 to 4.5 dB in the Effective Perceived Noise Level (EPNL), depending upon the engine cycle and bypass ratio. While this noise reduction is helpful, it is not sufficient within itself to solve all of the low bypass turbofan engine noise problems, and for this reason the multi-lobe mixing nozzle has had a limited commercial application.

The present disclosure utilizes the benefits of the flow mixer design in combination with a fixed plug and critically placed sound absorption material to substantially reduce the noise level of a turbofan engine.

Supported concentrically within the exhaust shroud is an elongated centerbody having an external cross-sectional area less than the internal cross-sectional area of the exhaust shroud thereby providing an annular area having substantially reduced channel flow height through which thrust producing exhaust gases of the engine pass. The walls of the shroud and plug may be parallel or may be arranged in a converging manner in the aft direction to allow the best match of aerodynamic and acoustic requirements.

With acoustical lining being affixed to the internal circumferential area of the shroud and the external surface area of the centerbody, this arrangement results in at least a substantial portion of the reduced channel height annular area through which thrust producing jet engine exhaust pass being surrounded by acoustical lining.

In the preferred arrangement, a centerbody is formed of various or multiple portions having different functions, that is, a forward aerodynamically-shaped portion tailored to minimize aerodynamic losses positioned in the direction toward the engine exhaust end, an intermediate portion which, by example, can be substantially cylindrical, and an aft aerodynamically-shaped portion. Acoustical lining is secured to at least substantially all of the external surfaces of the center portion of the centerbody to absorb internal preemergence noise.

In a further preferred embodiment, the centerbody, in addition to being formed of the various portions above described, includes the arrangement wherein the aft aerodynamic portion is of increased cross-sectional area compared to the forward aerodynamic portion and the cylindrical portion, and such increased cross-sectional area is substantially coincident with the aft end of the exhaust shroud.

The key principles of this disclosure are:
(a) An internal mixer reduces low frequency exit nozzle jet noise, and shifts the noise to higher frequency levels.
(b) The centerbody provides a channel of reduced height through which the engine noises pass. The channel is lined with sound absorbing material. Higher frequency sounds are more effectively absorbed by the sound absorbing material due to the reduced channel height. In addition, the shift of the sound towards higher frequencies achieved by the mixer enables the use of a centerbody of shorter length to attain a pre-selected level of sound attenuation than can otherwise be achieved.

A better understanding of the invention will be had by reference to the following detailed description and claims, taken in conjunction with the attached drawings.

### Description of the Drawings

Figure 1 is an elevational cross-sectional view of a noise suppressor system embodying the principles of this invention showing an exhaust shroud, a flow mixer, a centerbody and acoustical lining as the important elements thereof which are secured to a turbofan engine aft end.

Figure 2 is cross-section view taken along the line 2-2 of Figure 1 showing means of supporting the centerbody within the exhaust shroud.

Figure 3 is a cross-sectional view taken along the line 3-3 of Figure 1 showing more detail of one configuration of a flow mixer as employed with this invention.

Figure 4 is a cross-sectional view as in Figure 3 showing an alternate configuration of the centerbody with a frusto-conical intermediate portion.

### Description of the Preferred Embodiment

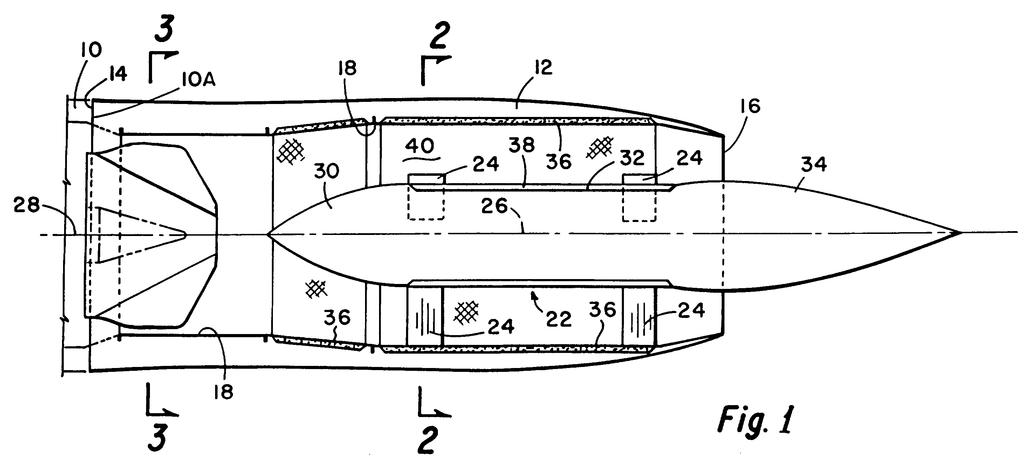

Referring to the drawings and first to Figure 1, a cross-sectional elevational view illustrates a preferred embodiment for practicing the principles of this invention. The aft portion of a turbofan engine is generally indicated by the numeral 10 and the engine aft end by the numeral 10A. To reduce the noise generated by such engine, according to the principles of this invention, there is affixed to the jet engine aft end 10A a tubular exhaust shroud 12 having a forward end 14 and an aft end 16. The exhaust shroud has an internal circumferential surface 18.

Supported within the shroud 12 and adjacent to the engine aft end 10A is a multi-lobe flow mixer 20. The essential function of the flow mixer 20 is to mix the core gas and fan air to reduce exit jet noise and to increase the frequency of the preemergence sound generated by the engine 10. For background information as to the examples of the configuration and construction of flow mixers of the type identified by the numeral 20, reference may be had to United States Patents US-A-4,077,208 and 4,117,671.

The number of lobes employed on the flow mixer 20 can vary, and the details of construction of the flow mixer, and particularly the number of lobes, will be determined by the characteristics of the turbofan engine 10 to which the noise reduction system is designed, with the basic general purpose, as above indicated, being that of raising the frequency of the sound produced by the jet engine. The flow mixer 20 may be physically affixed to the rearward end of the turbofan engine 10 or supported by the exhaust shroud 12.

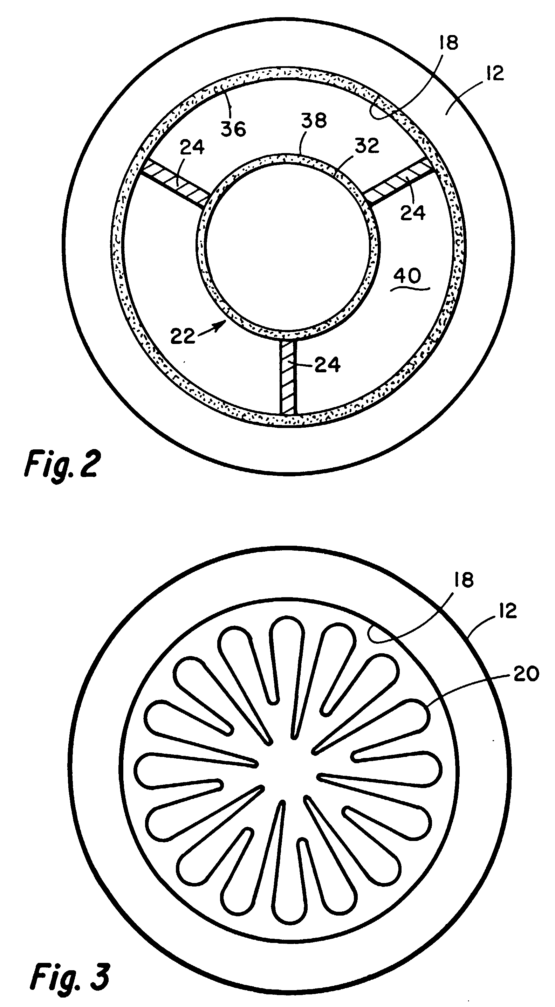

Positioned within the interior of the exhaust shroud 12 and aft of the flow mixer 20 is a centerbody generally indicated by the numeral 22. The centerbody is supported, as illustrated in Figure 2, by struts 24. The centerbody has a longitudinal axis 26 which may or may not be coincident with the longitudinal axis 28 of the turbofan engine 10. Further, the centerbody 22 preferably is substantially symmetrical about all cross-sections taken perpendicular to the longitudinal axis 26.

The centerbody 22 may be formed of a number of basic portions. In the illustrated embodiment, the centerbody is formed of a forward aerodynamically-shaped portion 30, a center, elongated cylindrical portion 32 which can also be of conical rather than cylindrical shape, and an aft aerodynamically-shaped portion 34. The primary function of centerbody 22 is to provide a reduced channel height annular area.

Of criticality to the present disclosure is the provision of acoustical lining 36 formed on at least a substantial portion of the interior circumferential surface 18 of the exhaust shroud.

In addition, of corresponding criticality is acoustic lining 38 formed on at least a substantial portion of the external surface area of centerbody 22.

The acoustic linings 36 and 38 are preferably in the form of commercially available sound absorbent honeycomb expanded metal core joined to a perforated inner skin, however, the acoustic linings may be formed of systems using perforated screens. The thickness of the honeycomb material varies with the dominant frequency to be suppressed, typically from about.3 inches to 3 inches in thickness depending on the range of frequencies. If formed of such honeycomb material, the size of the contiguous hexes is preferably about 1/4 to 3/4 of an inch. The depth and/or height of the honeycomb material, that is, .3 inches to 3 inches as an example, and the cell size, that is, 1/4 to 3/4 inch as an example, are selected to tune the sound absorption material to the predominate noise frequencies to be attenuated. Thus, in designing a system to incorporate the principles of this invention for a particular engine, the sound frequencies having the highest Perceived Noise Level Tone-corrected (PNLT) will determine the depth of the expanded honeycomb acoustical lining, as well as and in combination with the cell size. The thickness and cell size, that is, the predominate frequency absorbent characteristics, of the sound absorbing material may be varied from point to point within the annular area 40 to attenuate a band of sound frequencies.

The acoustic linings 36 and 38 are made of metal, with the metal being selected to be that which will tolerate turbofan engine exhaust applications, such as typically 200° F. to 1250° F. The acoustic lining can be bonded to the shroud internal circumferential surface 18 and the external circumferential surface of the centerbody 22, such as by epoxy or, if exhaust temperatures exist which preclude use of epoxy, the acoustical lining material may be brazed, welded, or mechanically held in place with fasteners.

By the use of the centerbody 22 a reduced channel height annular area 40 is provided between the exterior of the centerbody and the interior circumferential surface 18 of the exhaust shroud. This annular area 40 provides a pre-selected channel height, that is, the spacing between the centerbody external surface and the exhaust shroud internal circumferential surface. This channel height relative to the length of the annular area having acoustical lining on the opposed surfaces is critical to achieving the noise reduction desired. Generally, the greater the channel height, the longer the length of the area of opposed acoustical linings on the centerbody and within the exhaust shroud required. Where the system is designed primarily to reduce the intensities of higher frequency sounds, the channel height of the annular area 40 preferably is reduced as much as possible, and the total length of the annular area having acoustical linings on both sides can be reduced. Correspondingly, when the frequency of the sound which requires reduction is lowered, the channel height of the annular area 40 can be correspondingly increased, and the length of the acoustical lined areas increased.

As previously indicated, a basic function of the flow mixer 20 is to increase the frequency of sound produced by turbofan engine 10 since a high frequency sound is easier to attenuate than a lower frequency sound. The combination of the use of the flow mixer 20 with the centerbody 22 and with the acoustically lined reduced channel height annular area 40 provides a highly improved means of substantially reducing the EPNL of a jet engine.

In the preferred arrangement as illustrated, the cross-sectional area of the centerbody cylindrical portion 32 and the maximum cross-sectional area of the centerbody forward aerodynamically-shaped portion 30 are approximately the same, however, the maximum cross-sectional area of the centerbody aft portion 34 is greater. This increased cross-sectional area preferably occurs in the centerbody aft portion 34 substantially coincident with the exhaust shroud aft end 16 for efficiency of the overall exhaust nozzle. This means that the cross-sectional area of the annular space 40 is at a minimum at the exhaust shroud aft end 16.

Research directed to the application of the principles of this invention as set forth herein has indicated that the employment of the exhaust shroud 12, the flow mixer 20, the centerbody 22, and the acoustical linings 36 and 38 provides a noise reduction system of relatively low weight compared to other contemporary designs of equal capability, with a low drag characteristic, and with a take-off and cruise performance penalty of not greater than about 1 to 3% thrust reduction. Further, research has indicated that the employment of the principles of the invention disclosed herein are calculated to reduce the maximum engine power setting EPNL approximately 6.5 to 7.0 dB, to reduce the cutback power setting noise level 4.0 to 6.0 dB, and to reduce the approach power setting noise approximately 1 to 2 dB.

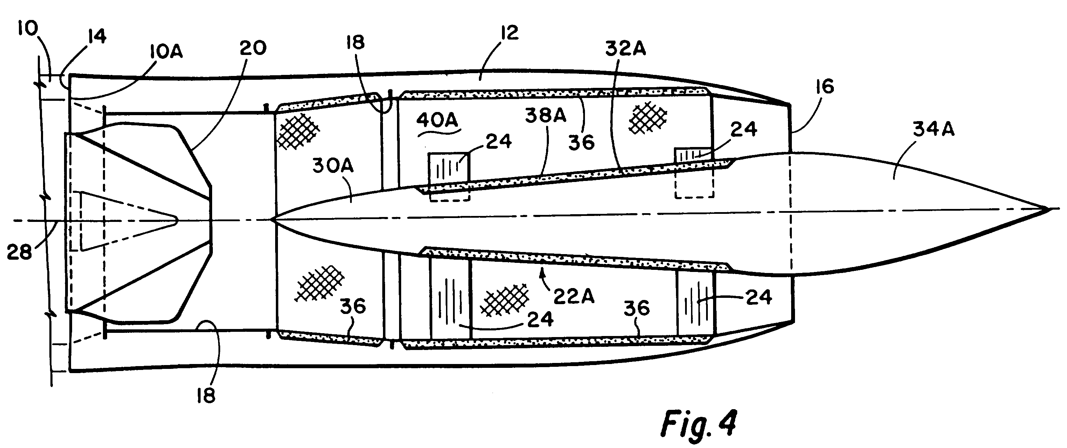

Figure 4 shows the application of the principles of this invention with a modified form of centerbody 22A. The centerbody is supported within the ejector shroud by means of struts 24, as previously described, with its longitudinal axis 26A preferably coincident with the engine longitudinal axis 10.

Centerbody 22A has an aerodynamically-shaped forward end 30A and an aft aerodynamically-shaped portion 34A as described above with reference to elements 22, 30 and 34, and an intermediate or center portion 32A which, in contrast with cylindrical intermediate portion 32 is frustro-conical in external shape and identified by 32A.

At least a substantial portion of the exterior surface of centerpiece 22A is covered with acoustical lining material. In Figure 4, substantially all of the exterior surface of the centerbody frustro-conical intermediate portion 22A is covered by acoustic lining material 38A.

The embodiment of Figure 4 shows an arrangement in which the walls between the exterior of the centerbody and the internal wall of shroud are not parallel but provide a tapered annular area 40A. Centerbody 22A with its conical wall converging in the forward direction allow improved match of the channel height of annular area 40A to the various frequencies of the noise of the turbofan engine 10 to be attenuated.

The advantages of the noise reduction system of this disclosure are obtained without the use of moving parts, and, therefore, with the obvious advantages of reduced failure opportunities and reduced maintenance requirements.

The claims and the specification describe the invention presented and the terms that are employed in the claims draw their meaning from the use of such terms in the specification. The same terms employed in the prior art may be broader in meaning than specifically employed herein. Whenever there is a question between the broader definition of such terms used in the prior art and the more specific use of the terms herein, the more specific meaning is meant.

## Claims

1. A noise suppressor system for a turbofan engine comprising a tubular exhaust shroud (12) affixed to the engine exhaust end, an elongated centerbody (22) supported within the exhaust shroud and having an external cross-sectional area less than the internal cross-sectional area of the exhaust shroud, providing an annular area (40) through which thrust producing exhaust gases of the engine pass, acoustical lining (36) affixed to at least a substantial portion of the internal circumferential area of the shroud in the area thereof receiving the centerbody, and acoustical lining (38) affixed to at least a substantial portion of the exterior surface of the centerbody in the area thereof received within the exhaust shroud, characterized in that the acoustical lining affixed to the exhaust shroud and the centerbody varies in sound attenuation characteristics from one portion to another of the annular area whereby a selected band of sound frequencies is attenuated.

2. A noise suppressor system according to Claim 1 including: a mixing nozzle (20) positioned between the engine aft exhaust end and said centerbody (22) to cause engine gas mixing to increase the frequency of the internal noise source and to thereby change the frequency of the engine noise to that which is more efficiently attenuated in the acoustically lined annular area (40) within the exhaust shroud (12).

3. A noise suppressor system according to Claim 1 or 2 wherein said centerbody (22) is substantially circular in all cross-sections normal to the longitudinal axis thereof and is aerodynamically contoured on each end (30, 34).

4. A noise suppressor system according to Claim 3 wherein said centerbody comprises a forward aerodynamically-shaped portion (30) in the direction toward the engine exhaust end, an intermediate substantially cylindrical portion (32) and an aft aerodynamically-shaped portion (34).

5. A noise suppressor system according to Claim 3 wherein said centerbody comprises a forward aerodynamically-shaped portion (30) in the direction toward the engine exhaust end, an aft aerodynamically-shaped portion (34), and an intermediate portion (32) of generally truncated conical external configuration converging in the direction toward said engine, the channel height dimensions of said annular area (40) being thereby varied by the conical configuration of said centerbody intermediate portion.

6. A noise suppressor system according to Claim 4 or 5 wherein at least a substantial portion of the exterior surface of said centerbody intermediate portion (32) is covered by acoustical lining material (38).

7. A noise suppressor system according to Claim 4, 5 or 6 wherein a portion of said centerbody aft aerodynamically-shaped portion (34) is of an external diameter greater than the external diameter of said centerbody intermediate portion (32).

8. A noise suppressor system according to Claim 7 wherein said portion of said aft aerodynamically-shaped portion (34) of greater external diameter is in a plane substantially coincident with the aft end (16) of said exhaust shroud (12), forming an exhaust nozzle, a portion of said centerbody after end (34) extending rearwardly of said exhaust shroud aft end.

9. A noise suppressor system according to Claim 7 or 8 wherein the cross-sectional area of the annular space (40) is at a minimum at the aft end (16) of said exhaust shroud (12).

## Patentansprüche

1. Schalldämpfersystem für ein Mantelstromtriebwerk, umfassend eine rohrförmige Austrittsummantelung (12), die am Triebwerksaustrittsende befestigt ist, einen länglichen Zentralkörper (22), der innerhalb der Austrittsummantelung abgestützt ist und der eine äußere Querschnittsfläche aufweist, die kleiner ist als die innere Querschnittsfläche der Austrittsummantelung, wodurch eine Ringzone gebildet ist, durch welche die schuberzeugenden Austrittsgase des Triebwerkes hindurchtreten, eine akustische Auskleidung (36), die wenigstens an einem wesentlichen Abschnitt der inneren Umfangsfläche der Austrittsummantelung in deren Bereich, der den Zentralkörper aufnimmt, befestigt ist, und eine akustische Auskleidung (38), die wenigstens an einem wesentlichen Abschnitt der äußeren Oberfläche des Zentralkörpers in dessen Bereich, der in der Austrittsummantelung aufgenommen ist, befestigt ist, dadurch gekennzeichnet, daß die akustischen Auskleidungen, die an der Austrittsummantelung und dem Zentralkörper befestigt sind, in den Schalldämpfungseigenschaften von einem Abschnitt der Ringzone zu einem anderen variieren, wodurch ein ausgewähltes Band von Schallfrequenzen gedämpft wird.

2. Schalldämpfersystem nach Anspruch 1, umfassend:
eine Mischdüse (20), die zwischen dem hinteren Triebwerksaustrittsende und dem Zentralkörper (22) angeordnet ist, um eine Triebwerksgasvermischung zu bewirken, um die Frequenz der inneren Lärmquelle zu erhöhen und um dadurch die Frequenz des Triebwerklärms in eine solche umzuwandeln, die wirkungsvoller in der akustisch ausgekleideten Ringzone (40) innerhalb der Austrittsummantelung gedämpft wird.

3. Schalldämpfersystem nach Anspruch 1 oder 2, bei dem der Zentralkörper (22) in allen normal zu seiner Längsachse verlaufenden Querschnitten im wesentlichen kreisförmig ist und an jedem Ende aerodynamisch gestaltet ist.

4. Schalldämpfersystem nach Anspruch 3, bei dem der Zentralkörper einen vorderen, aerodynamisch geformten Abschnitt (30) in Richtung zum Triebwerksaustrittsende, einen im wesentlichen zylindrischen Zwischenabschnitt (32) und einen hinteren aerodynamisch geformten Abschnitt (34) aufweist.

5. Schalldämpfersystem nach Anspruch 3, bei dem der Zentralkörper einen vorderen, aerodynamisch geformten Abschnitt (30) in Richtung zum Triebwerksaustrittsende,einen hinteren aerodynamisch geformten Abschnitt (34) und einen Zwischenabschnitt (32) mit im wesentlichen kegelstumpfförmiger äußerer Gestaltung, die sich zum Triebwerk hin verjüngt, wobei die Kanalhühenabmessungen der Ringzone (40) dadurch durch die konische Gestaltung des Zwsichenabschnittes des Zentralkörpers variiert werden.

6. Schalldämpfersystem nach Anspruch 4 oder 5, bei dem wenigstens ein wesentlicher Teil der äußeren Oberfläche des Zwischenabschnittes (32) des Zentralkörpers von akustischem Auskleidungsmaterial (38) überdeckt ist.

7. Schalldämpfersystem nach Anspruch 4, 5 oder 6, bei dem ein Teil des hinteren aerodynamisch geformten Abschnittes (34) des Zentralkörpers einen Durchmesser aufweist, der größer ist als der äußere Durchmesser des Zwischenabschnittes (32) des Zentralkörpers.

8. Schalldämpfersystem nach Anspruch 7, bei dem der Teil mit dem größeren Außendurchmesser des hinteren aerodynamisch geformten Abschnittes (34) in einer Ebene angeordnet ist, die im wesentlichen mit dem hinteren Ende (16) der Austrittsummantelung zusammenfällt.

9. Schalldämpfersystem nach Anspruch 7 oder 8, bei dem die Querschnittsfläche der Ringzone (40) am hinteren Ende der Austrittsummantelung bei einem Minimum ist.

## Revendications

1. Système amortisseur de bruit, pour un moteur de turboréacteur à double flux, comprenant une enveloppe d'échappement tubulaire (12), fixée à l'extrémité d'échappement du moteur, un corps central (22) allongé, supporté à l'intérieur de l'enveloppe d'échappement et ayant une aire de section transversale externe inférieure à l'aire de section transversale interne de l'enveloppe d'échappement, créant une aire annulaire (40) à travers laquelle passent des gaz d'échappement, produisant une poussée et venant du moteur, un garnissage acoustique (36), fixé à au moins une partie substantielle de l'aire interne circonférentielle de l'enveloppe dans son aire recevant le corps central, et un garnissage acoustique (38), fixé à au moins une partie substantielle de la surface extérieure du corps central dans son aire logée à l'intérieur de l'enveloppe d'échappement, caractérisé en ce que le garnissage acoustique fixé à l'enveloppe d'échappement et au corps central varie quant aux caractéristiques d'atténuation sonore, d'une partie à une autre de l'aire annulaire, de manière qu'une bande de fréquences sonores sélectionnée soit atténuée.

2. Système amortisseur de bruit selon la revendication 1, comprenant :
une buse de mélange (20), positionnée entre l'extrémité d'échappement arrière du moteur et ledit corps central (22), pour provoquer un mélange des gaz venant du moteur, de manière à augmenter la fréquence de la source de bruit interne, et de manière à modifier la fréquence du bruit du moteur pour atteindre une valeur plus efficacement atténuée dans l'aire annulaire (40), dotée d'un garnissage acoustique, à l'intérieur de l'enveloppe d'échappement (12).

3. Système amortisseur de bruit selon la revendication 1 ou 2, dans lequel ledit corps central (22) est sensiblement circulaire pour toutes les sections transversales perpendiculaires à son axe longitudinal et est profilé aérodynamiquement à chaque extrémité (30, 34).

4. Système amortisseur de bruit selon la revendication 3, dans lequel ledit corps central comprend une partie avant (30) à forme aérodynamique, tenant compte de la direction allant vers l'extrémité d'échappement du moteur, une partie intermédiaire (32) sensiblement cylindrique et une partie arrière (34) à forme aérodynamique.

5. Système amortisseur de bruit selon la revendication 3, dans lequel ledit corps central comprend une partie avant (30) à forme aérodynamique, tenant compte de la direction allant vers l'extrémité d'échappement du moteur, une partie arrière (34) à forme aérodynamique, et une partie intermédiaire (32) à configuration externe globalement tronconique, allant en convergeant dans la direction longitudinale dudit moteur, les dimensions en hauteur du canal de ladite aire annulaire (40) étant de cette manière modifiées par la configuration conique de ladite partie intermédiaire du corps central.

6. Système amortisseur de bruit selon la revendication 4 ou 5, dans lequel au moins une partie substantielle de la surface extérieure de ladite partie intermédiaire (32) du corps central est recouverte d'un matériau de garnissage acoustique (38).

7. Système amortisseur de bruit selon la revendication 4, 5 ou 6, dans lequel une partie de ladite partie arrière (34) à configuration aérodynamique, du corps central est d'un diamètre externe supérieur au diamètre externe de ladite partie intermédiaire (32) du corps central.

8. Système amortisseur de bruit selon la revendication 7, dans lequel ladite partie de la partie arrière (34) à forme aérodynamique de plus grand diamètre externe est un plan qui coïncide sensiblement avec l'extrémité arrière (16) de ladite enveloppe d'échappement (12), formant une tuyère d'échappement, une partie de ladite extrémité arrière (34) du corps central s'étendant plus à l'arrière que ladite extrémité arrière d'enveloppe d'échappement.

9. Système amortisseur de bruit selon la revendication 7 ou 8, dans lequel l'aire de section transversale dudit espace annulaire (40) est minimale au niveau de l'extrémité arrière (16) de ladite enveloppe d'échappement (12).
